# EUROPÄISCHE PATENTSCHRIFT

(11) **EP 1 095 070 B1**
(45) Veröffentlichungstag und Bekanntmachung des Hinweises auf die Patenterteilung: **02.04.2003**
(21) Anmeldenummer: 99929127.1
(22) Anmeldetag: 02.06.1999
(51) Int. Cl.: C08F 10/10, C08F 4/14

(54) **VERFAHREN ZUR HERSTELLUNG HOCHREAKTIVER POLYISOBUTENE**
METHOD FOR PRODUCING HIGHLY REACTIVE POLYISOBUTENES
PROCEDE DE PREPARATION DE POLYISOBUTENES TRES REACTIFS

(30) Priorität: 05.06.1998 DE 19825334
(43) Veröffentlichungstag der Anmeldung: 02.05.2001
(73) Patentinhaber: BASF AKTIENGESELLSCHAFT, 67056 Ludwigshafen (DE)
(72) Erfinder: RATH, Hans, Peter, D-67269 Grünstadt (DE)
(86) Internationale Anmeldenummer: EP9903829
(87) Internationale Veröffentlichungsnummer: WO99064482

(56) Entgegenhaltungen:
- EP-A- 0 145 235
- WO-A-93/10063
- DE-A- 2 702 604
- DE-A- 19 520 078
- US-A- 5 408 018

## Beschreibung

Die vorliegende Erfindung betrifft ein Verfahren zur Herstellung hochreaktiver Polyisobutene mit einem Gehalt an endständigen Vinylidengruppierungen von über 80 Mol-% und einem mittleren Molekulargewicht von 500 bis 5000 Dalton durch die kationische Polymerisation von Isobuten in der flüssigen Phase in Gegenwart von Bortrifluorid Komplexen bei Temperaturen von +40°C bis -60°C.

Hochmolekulare Polyisobutene mit Molekulargewichten bis zu mehreren 100 000 Dalton sind seit langem bekannt und ihre Herstellung wird beispielsweise in H. Güterbock: Polyisobutylen und Mischpolymerisate, S. 77 bis 104, Springer, Berlin 1959, beschrieben. Die zur Zeit erhältlichen Polyisobutene mit Molekulargewichten von 500 bis 5000 Dalton werden mit Hilfe von Lewis-Säure-Katalysatoren, wie Aluminiumchlorid, Aluminiumalkylchloriden oder Bortrifluorid hergestellt und haben meist weniger als 10 Mol.-% endständige Doppelbindungen (Vinylidengruppierungen) und eine Molekulargewichtsverteilung (Dispersität) zwischen 2 und 5.

Von diesen herkömmlichen Polyisobutenen sind die sogenannten hochreaktiven Polyisobutene zu unterscheiden, welche einen hohen Gehalt an endständigen Vinylidengruppierungen von vorzugsweise deutlich über 60 Mol.-% haben. Solche hochreaktiven Polyisobutene haben inzwischen einen Marktanteil von 10 % erlangt und werden als Zwischenprodukt zur Herstellung von Additiven für Schmierund Kraftstoffe verwendet, wie sie beispielsweise in DE-A 27 02 604 beschrieben sind. Zur Herstellung dieser Additive werden zunächst durch Reaktion überwiegend endständiger Doppelbindungen des Polyisobutens mit Maleinsäureanhydrid, Polyisobuten-Maleinsäureanhydrid-Addukte, insbesondere Polyisobutenylbernsteinsäureanhydride, erzeugt, welche anschließend mit bestimmten Aminen zum fertigen Additiv umgesetzt werden. Da bei der Adduktbildung mit Maleinsäureanhydrid hauptsächlich die endständigen Vinylidengruppierungen reagieren, wohingegen die weiter im Innern der Makromoleküle liegenden Doppelbindugen je nach ihrer Lage im Makromolekül ohne die Zugabe von Halogenen zu keinem oder zu einem deutlich geringeren Umsatz führen, ist der Anteil an endständigen Vinylidengruppierungen im Molekül das wichtigste Qualitätskriterium für diesen Polyisobutentypus.

Über das Zustandekommen der endständigen Vinylidengruppierungen und die Isomerisierung der endständigen Doppelbindungen in den Isobutenmakromolekülen zu internen Doppelbindungen bestehen nach Puskas et al, J. Polymer Sci.: Symposium No. 56, 191 (1976) die im folgenden Formelschema wiedergegebenen Vorstellungen.

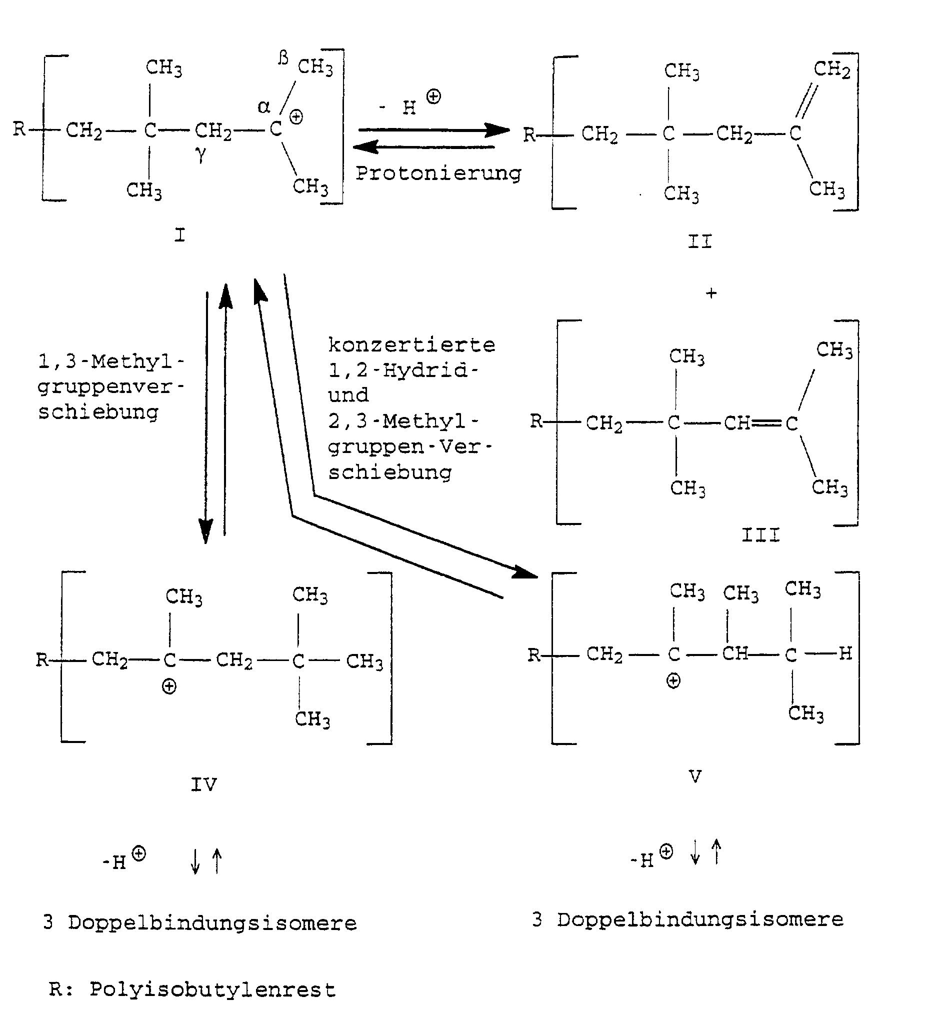

Das im Laufe der Polymerisationsreaktion entstehende Polyisobutenkation I kann durch die Abspaltung eines Protons in das betreffende Polyisobuten übergehen. Dabei kann das Proton sowohl aus einer der β-Methylgruppen oder aus der internen γ-Methylengruppe abgespalten werden. Je nachdem aus welcher dieser beiden Positionen das Proton abgespalten wird, entsteht dabei ein Polyisobuten mit einer endständigen Vinylidengruppierung II oder mit einer trisubstituierten, nahe dem Ende des Moleküls befindlichen Doppelbindung III.

Das Polyisobutenkation I ist relativ instabil und versucht sich durch Umlagerung in höhersubstituierte Kationen zu stabilisieren. Dabei können sowohl 1,3-Methylgruppenverschiebungen zum Polyisobutenkation IV als auch sukzessive oder konzertierte 1,2-Hydridund 2,3-Methylgruppenverschiebungen zum Polyisobutenkation V stattfinden. Aus den Kationen IV und V können sich, je nachdem aus welcher Position das Proton abgespalten wird, jeweils drei verschiedene doppelbindungsisomere Polyisobutene bilden. Es besteht aber auch die Möglichkeit, daß sich die Kationen IV und V weiter umlagern, mit der Wirkung, daß die Doppelbindung noch weiter ins Innere des Polyisobutenmakromoleküls wandert.

Alle diese Deprotonierungen und Umlagerungen sind Gleichgewichtsreaktionen und sind somit reversibel, wobei allerdings, letztendlich die Bildung stabilerer, höhersubstituierter Kationen und somit die Bildung von Polyisobutenen mit innenständiger Doppelbindung unter Einstellung des thermodynamischen Gleichgewichtes bevorzugt ist. Diese Deprotonierungen, Protonierungen und Umlagerungen werden durch gegebenenfalls im Reaktionsgemisch enthaltene Säurespuren, insbesondere jedoch vom zur Katalyse der Poly- merisation benötigten Lewis-Säure-Katalysator selbst katalysiert. Dem Reaktivitätsverlust durch Isomerisierung kann man daher nur durch kurze Verweilzeiten oder sterische Hinderung des Komplex-Anions entgegenwirken. Da lediglich Polyisobutene mit endständigen Vinylidengruppierungen gemäß Formel II sehr gut unter Adduktbildung mit Maleinsäureanhydrid reagieren, Polyisobutene der Formel III im Vergleich dazu bereits eine deutlich verminderte Reaktivität haben und andere Polyisobutene mit höhersubstituierten Doppelbindungen gegenüber Maleinsäureanhydrid praktisch unreaktiv sind, wird das fortwährende Bemühen vieler Forschungsgruppen, verbesserte Verfahren zur Herstellung hochreaktiver Polyisobutene oder Polyisobutene mit immer höheren Gehalten an endständigen Doppelbindungen zu finden, verständlich.

Nach der Lehre von DE-A 27 02 604 können reaktive Polyisobutene mit bis zu 88 Gew.-% endständigen Doppelbindungen durch die Bortrifluorid-katalysierte Polymerisation von Isobuten bei Temperaturen von -50 bis +30°C und bei Verweilzeiten von unter 10 Minuten erhalten werden. Ein niedrigerer Wert als 1,8 wird für die Dispersität bei den so hergestellten Polyisobutenen nicht gefunden.

Polyisobutene mit ähnlich hohen Anteilen endständiger Doppelbindungen, jedoch mit einer engeren Molekulargewichtsverteilung sind nach dem Verfahren der EP-A 145 235 herstellbar, indem man Isobuten in Gegenwart eines vorgebildeten Komplexes aus Bortrifluorid und einem primären Alkohol bei Temperaturen von -100 bis +50°C und bei einer Kontaktzeit für die Polymerisationsreaktion von mehr als 8 Minuten polymerisiert, wobei das Molverhältnis von Bortrifluorid zu Alkohol 0,5 zu 1 bis 5 zu 1 betragen soll. Nachteilig an diesem Verfahren ist, daß Polyisobutene mit einem hohen Gehalt an endständigen Doppelbindungen von über 80 % nur unter Inkaufnahme eines niedrigen Isobutenumsatzes erhältlich sind und die so gewonnenen Polyisobutene besonders teuer in der Herstellung sind.

Polyisobutene mit einem Gehalt von bis zu 95 Molprozent endständigen Doppelbindungen sollen nach dem Gasphasenverfahren der US-A 3 166 546 sowie nach dem Verfahren von US-A 3 024 226 erzeugt werden können, in dem eine Bortrifluorid-Schwefeldioxid-Gasmischung als Katalysator verwendet wird. Die Charakterisierung dieser Polyisobutene stützt sich auf die Ergebnisse der Infrarot-Spektroskopie. Eine Untersuchung der nach diesen Verfahren hergestellten Polyisobutene mit Hilfe der zur Zeit der Abfassung dieses Patentes noch nicht üblichen, zur Bestimmung endständiger Doppelbindungen wesentlich spezifischeren und genaueren Methode der ¹³C-Kernresonanz- Spektroskopie (¹³C-NMR-Spektroskopie) ergab jedoch nur einen Gehalt von maximal 40 Mol-% endständigen Doppelbindungen.

US-A 4 227 027 lehrt Bortrifluorid-katalysierte Alkyltransferreaktionen, wobei als Katalysatoren Addukte aus Bortrifluorid und Diolen oder Polyolen bei Temperaturen von 40 bis 120°C eingesetzt werden. Bei der Anwendung dieses Verfahrens auf die Polymerisation von Isobuten unter Anwendung eines Bortrifluorid-1,2-Butandiol-Adduktes als Katalysator entstand als einziges Produkt Diisobutylen. Polyisobuten wurde nicht gebildet.

Weitere Qualitätskriterien für Polyisobutene mit dem genannten Verwendungszweck sind deren mittleres Molekulargewicht und die Molekulargewichtsverteilung, auch als Dispersität bezeichnet, der im Polyisobuten enthaltenen Makromoleküle. Im allgemeinen werden Polyisobutene mit mittleren Molekulargewichten (Mₙ) von 500 bis 5000 Dalton als Zwischenprodukte zur Herstellung der erwähnten Schmier- und Kraftstoffadditive verwendet. Bevorzugt sind jedoch wegen ihrer besseren Wirksamkeit für diesen Zweck Polyisobutene mit Molekulargewichten von 800 bis 3000, insbesondere von 1000 bis 2500 Dalton.

Bei der Polymerisation von Isobuten entstehen Polyisobutenprodukte, deren Polyisobutenkomponenten, also die Polyisobutenmakromoleküle, eine mehr oder weniger breite, statistische Molekulargewichtsverteilung haben, mit der Folge, daß diese Polyisobutene, je breiter ihre Molekulargewichtsverteilung ist, einen immer größeren Anteil an Polyisobutenmakromolekülen mit relativ niedrigen oder relativ hohen Molekulargewichten enthalten, welche für den erwähnten Verwendungszweck mehr oder weniger ungeeignet, da relativ unwirksam, sind. Es besteht daher das Bestreben, hochreaktive Isobutene mit mittleren Molekulargewichten, welche in den bevorzugten Molekulargewichtsbereichen liegen, herzustellen, wobei deren Molekulargewichtsverteilung vorzugsweise möglichst eng sein sollte, um den Anteil an unerwünschten, relativ niederoder hochmolekularen Polyisobutenen im erzeugten Produkt zurückzudrängen und so dessen Qualität zu verbessern.

Die Lösung dieses Problems wurde bereits mit einem in US 5,408,018 beschriebenen verfahren versucht, mit dem man hochreaktive Polyisobutene mit einem Gehalt an endständigen Vinylidengruppierungen von über 80 Mol-% und einem mittleren Molekulargewicht von 500 bis 5000 Dalton durch die kationische Polymerisation von Isobuten in der flüssigen Phase mit Hilfe von Bortrifluorid als Katalysator und bei Temperaturen von 0°C bis -60°C erhält, wenn man in Gegenwart von sekundären Alkoholen mit 3 bis 20 Kohlenstoffatomen und/oder Dialkylethern mit 2 bis 20 Kohlenstoffatomen polymerisiert. Als Dialkylether werden vor allem solche Ether verwendet, die zumindest eine tertiäre Alkylgruppe enthalten. Obgleich mit diesem Verfahren, gemäß Beispiel 6 1. c. in Gegenwart eines Komplexes aus BF₃ mit 2-Butanol und 2-Butyl-tert.butylether, bereits sehr gute Ergebnisse erzielt werden, bestand die Aufgabe, das Verfahren zu vereinfachen und insbesondere die Nebenproduktbildung in Form von tertiärem Butanol und tertiär org. Fluoriden zu verringern, die den Aufwand der Lösemittelreinigung erhöhen und die Ausbeute an Polymer verringern.

Diese Aufgabe wurde erfindungsgemäß gelöst mit einem Verfahren zur Herstellung hochreaktiver Polyisobutene mit einem Gehalt an endständigen Vinylidengruppierungen von über 80 Mol-% und einem mittleren Molekulargewicht von 500 bis 5000 Dalton durch kationische Polymerisation von isobuten in flüssiger Phase in Gegenwart eines Komplexes aus Bortrifluorid, bei Temperaturen von +40°C bis -60°C, das dadurch gekennzeichnet ist, dass man in Gegenwart eines Komplexes aus Bortrifluorid und
a) einem primären Alkohol mit 1 bis 20 C-Atomen oder einem sekundären Alkohol mit 3 bis 20 C-Atomen oder einem Gemisch dieser Alkohole und
b) einem von tertiären alkylgruppen freien Ether der Formel I

   R¹-O-R² I,

   in der R¹ und R² primäre oder sekundäre Alkylgruppen mit 3 bis 10 C-Atomen bedeuten, mit der Maßgabe, dass mindestens eine der Gruppen R¹ und R² eine sekundäre Alkylgruppe ist, polymerisiert.

Als bevorzugten sekundären Alkohol verwendet man 2-Butanol und insbesondere Isopropanol und als bevorzugten Ether Diisopropylether oder Di-sec.-butylether.

Unter endständigen Vinylidengruppierungen oder endständigen Doppelbindungen werden im Sinne der vorliegenden Anmeldung solche Doppelbindungen verstanden, deren Lage im Polyisobutenmakromolekül, durch die allgemeine Formel IIa 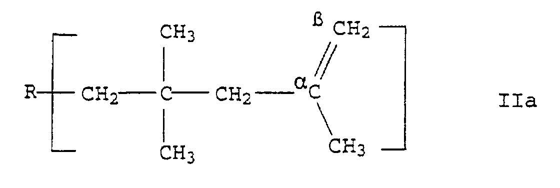 beschrieben wird, in der R für den betreffenden Polyisobutylenrest steht. Die Art und der Anteil der im erfindungsgemäß hergestellten Polyisobuten vorhandenen Doppelbindungen wird mit Hilfe der Methode der ¹³C-NMR-Spektroskopie bestimmt, wobei die beiden in Formel IIa mit α und β markierten Kohlenstoffatome der endständigen Doppelbindung im ¹³C-NMR-Spektrum durch ihre Signale bei der chemischen Verschiebung von 114,4 bzw. 143,6 ppm identifizierbar sind und der Anteil der endständigen Doppelbindungen bezüglich anderer Arten von Doppelbindungen über die Ermittlung der Peakflächen der Signale in Relation zum Gesamtintegral der Olefinsignale errechnet wird.

Als mittleres Molekulargewicht oder mittlere Molmasse wird in dieser Anmeldung das Zahlenmittel Mₙ des Molekulargewichts bezeichnet, das beispielsweise mit Hilfe der Gelpermeationschromatographie, durch Ozonolyse oder mittels Dampfdruckosmometrie bestimmt werden kann.

Mit dem erfindungsgemäßen Verfahren können Polyisobutene mit einem Gehalt von über 80 Mol-%, insbesondere von über 90 Mol-%, endständigen Vinylidengruppen durch die kationische Polymerisation von Isobuten in der flüssigen Phase bei Temperaturen von +40 bis -60°C, vorzugsweise von -4 bis -30°C und besonders bevorzugt bei -10 bis -20°C hergestellt werden.

Als protische Komplexbestandteile, auch als Initiator bezeichnet, kommen praktisch alle primären Alkohole mit 1 bis 20 C-Atomen als auch alle sekundären Alkohole mit 3 bis 20 Kohlenstoffatomen in Betracht, d. h. die primären bzw. sekundären Alkohole können geradkettig oder verzweigt sein.

Beispielhaft seien als erfindungsgemäß verwendbare primäre Alkohole Methanol, Ethanol, n-Propanol, n-Butanol, n-Pentanol, n-Hexanol, n-Heptanol, n-Octanol, n-Nonanol, n-Decanol, 2-Ethylhexanol, 2-Propylheptanol, n-Undecanol, n-Dodecanol, n-Tridecanol, Ethylenglykol und n-Eicosanol genannt.

Beispielhaft für geeignete sekundäre Alkohole seien die folgenden genannt: Isopropanol, 2-Butanol, sowie ferner sek.-Pentanole, sek.-Hexanole, sek.-Heptanole, sek. -Octanole, sek. -Nonanole, sek.-Decanole oder sek.-Tridecanole.

Außer einwertigen, primären und/oder sekundären Alkoholen können auch (poly-)Etherole des Ethylen-, Propen- und Butenoxids als auch Polytetrahydrofuran erfindungsgemäß verwendet werden.

Bevorzugt wird 2-Butanol und insbesondere Isopropanol verwendet.

Als von tertiären Alkylgruppen freie Ether der Formel I

R¹-O-R²,

kommen beliebige Ether in Betracht, bei denen die Gruppen R¹ und/oder R² sich von einem sekundären Alkohol ableiten und primäre oder sekundäre Alkylgruppen mit 3 bis 10 C-Atomen bedeuten, d. h. Alkylgruppen, die entweder als -CH₂-R- oder -CH-(R)₂-Gruppe an das Ethersauerstoffatom gebunden enthalten, jedoch nicht als -C-(R)₃-Gruppe. Im einzelnen sind z. B. für R¹ und R² folgende Gruppen zu nennen:

Isopropyl-, 2-Butyl, Sek. Pentyl-, Hexyl-, Heptyl- und Octyl, für R² zusätzlich Methyl-, Ethyl-, Propyl-, Butyl-, Pentyl- und Hexylgruppen.

Besonders bevorzugt sind Diisopropylether, Isopropyl-2-butylether und Di-2-butylether.

Die Bortrifluorid/Ether/Alkoholkomplexe werden zweckmäßigerweise durch Einleiten von gasförmigem Bortrifluorid in den betreffenden Ether und den Alkohol oder vorzugsweise in eine Lösung des betreffenden Ethers und Alkohols in einem Lösungsmittel hergestellt. Die Darstellung dieser Komplexe erfolgt in der Regel bei Temperaturen von -60 bis +40°C, vorzugsweise bei -20 bis +40°C. Die Anwendung tieferer Temperaturen ist ebenfalls möglich, erfordert jedoch einen erhöhten technischen Aufwand zur Erzeugung derart tiefer Temperaturen. Die Komplexbildung von Bortrifluorid mit sekundären Alkoholen verläuft exotherm, weshalb die Reaktionsmischung vorteilhafterweise gekühlt wird, um sie auf der gewünschten Temperatur zu halten.

Viele erfindungsgemäß zu verwendende Komplexe des Bortrifluorids sind bei tiefen Temperaturen hochviskose Flüssigkeiten oder sogar Feststoffe. In solchen Fällen ist es vorteilhaft, die Bortrifluorid-Komplexe in einem Lösungsmittel zu erzeugen. Geeignete Lösungsmittel sind beispielsweise Kohlenwasserstoffe, wie Pentan, Hexan, Isooctan oder halogenierte Kohlenwasserstoffe, wie Methylenchlorid oder Chloroform. Es können selbstverständlich auch Lösungsmittelgemische verwendet werden. In der Regel gilt, daß je polarer das verwendete Lösungsmittel ist, desto besser die gebildeten Bortrifluorid-Komplexe darin löslich sind.

Bei der Erzeugung der erfindungsgemäß zu verwendenden Bortrifluorid-Komplexen in unpolaren Lösungsmitteln, wie den obengenannten Kohlenwasserstoffen oder einer Polyisobutenlösung, kann es daher infolge einer Überschreitung des Löslichkeitsproduktes zur Abscheidung des Bortrifluorid-Komplexes unter Ausbildung einer Emulsion oder Suspension kommen. Da das erfindungsgemäße Verfahren sowohl durch homogen im Reaktionsmedium gelöste als auch durch heterogen im Reaktionsmedium verteilte Katalysatorkomplexe katalysiert wird, sind solche Katalysatorabscheidungen in der Regel nicht kritisch.

Die Bortrifluorid-Komplexe können in separaten Reaktoren vor ihrem Einsatz im erfindungsgemäßen Verfahren vorgebildet werden, nach ihrer Bildung zwischengelagert und je nach Bedarf in die Polymerisationsapparatur eindosiert werden.

Zur Zwischenlagerung werden die Lösungen der vorgeformten Bortrifluorid-Komplexe, gegebenenfalls nach Verdünnung mit weiterem Lösungsmittel, zweckmäßigerweise in kühlbare Behälter gefüllt und bei Temperaturen von im allgemeinen unter 0°C bis zu ihrem Gebrauch gelagert.

Eine andere, bevorzugte Variante besteht darin, daß man die Bortrifluorid-Komplexe in situ in der Polymerisationsapparatur erzeugt. Bei dieser Verfahrensweise wird der betreffende Alkohol und der Ether gegebenenfalls gemeinsam mit einem Lösungsmittel und zusammen mit dem Isobuten in die Polymerisationsapparatur eingespeist und Bortrifluorid in der erforderlichen Menge in dieser Mischung der Reaktanten dispergiert, in der es sich mit dem Alkohol und dem Ether zum Bortrifluorid-Komplex umsetzt. Anstelle eines zusätzlichen Lösungsmittels kann bei der in situ-Erzeugung des Bortrifluorid-Katalysator-Komplexes vorteilhaft Isobuten oder die Reaktionsmischung aus nicht umgesetztem Isobuten und Polyisobuten als Lösungsmittel fungieren. Dient die Reaktionsmischung aus Polyisobuten-haltigem Isobuten als Lösungsmittel, wird selbstverständlich das Isobuten in der Regel nicht vollständig umgesetzt und zweckmäßigerweise ein Isobuten-Teilumsatz von im allgemeinen max. 80 %, vorzugsweise von max. 70 % eingestellt.

Die in situ-Darstellung der Bortrifluorid-Komplexe bei der Herstellung hochreaktiver Polyisobutene, stellt wie bei dem Verfahren der US 5,408,018 eine bedeutende Vereinfachung des Verfahrens zu deren Herstellung dar. Erwähnt sei hier nur der verminderte apparative Aufwand, da keine Reaktoren zur Herstellung vorgeformter Komplexe und auch keine Lagertanks für die vorgeformten Komplexlösungen mehr benötigt werden.

Zweckmäßigerweise werden die Katalysatoren aus Bortrifluorid und sekundärem Alkohol und Ether in dem Molverhältnis hergestellt, das der im erfindungsgemäßen Verfahren zu verwendende Komplex haben soll, d.h. nach der Erzeugung des betreffenden Komplexes wird das Molverhältnis Bortrifluorid/sek.-Alkohol/Ether üblicherweise nicht mehr geändert.

Das molare Verhältnis Alkohol zu Ether kann von 0,01 bis 10 variieren. Besonders bevorzugt ist ein Verhältnis von 0,02 bis 2 und ganz besonders von 0,2 bis 1,0.

Die BF₃-Konzentration im Reaktor kann deutlich höher liegen als dies bisher üblich war und sollte im allgemeinen 0,01 und 1 Gew.-%, besonders bevorzugt 0,05 und 0,5 Gew.-% betragen. Die molare Konzentration der Komplexbildner Alkohol und Ether orientiert sich an der BF₃-Konzentration; das Molverhältnis der Summe aus Alkohol und Ether zu BF₃ ist größer als 1 und kleiner als 2 und beträgt vorzugsweise zwischen 1,4 und 2.

Die Isobutenkonzentration im Reaktor liegt in der Regel zwischen 0,5 und 60 Gew.-%, für Polyisobuten bis M_{N} 3000 bevorzugt zwischen 0,5 und 20 Gew.-%, besonders bevorzugt unter 5 Gew.-%. Die Polymerkonzentration liegt zwischen 10 und 60 Gew.-%.

In einer bevorzugten Ausführungsform wird zunächst der BF₃/Etherkomplex getrennt oder im Lösungsmittelzulauf zum Reaktor hergestellt und erst dann im Komplexzulauf oder Lösungsmittelzulauf zum Reaktor oder erst im Reaktor mit dem Alkohol zusammengebracht. Dadurch kann die Energie der Komplexbildung ohne schädliche Nebenproduktbildung bei der Erzeugung des Alkoholkomplexes abgeführt werden.

Als Rohstoff zur Herstellung der Bortrifluorid-Komplexe wird zweckmäßigerweise gasförmiges Bortrifluorid benutzt, wobei technisches, noch geringe Mengen Schwefeldioxid und SiF₄ enthaltenes (Reinheit: 96,5 Gew.-%), vorzugsweise aber hochreines Bortrifluorid (Reinheit: 99,5 Gew.-%) verwendet werden kann.

Zur erfindungsgemäßen Herstellung hochreaktiver Polyisobutene wird also die vorgebildete Bortrifluorid-Komplexlösung oder Suspension entsprechend dem Katalysatorbedarf im Isobuten verteilt oder alternativ der Katalysator im Alkohol-Ether-haltigen Isobutenstrom durch Einleiten von gasförmigem Bortrifluorid in situ erzeugt. Als Isobuten-Feedstock können im erfindungsgemäßen Verfahren reines Isobuten aber auch Gemische von Isobuten mit anderen Kohlenwasserstoffen eingesetzt werden, deren Isobutengehalt zweckmäßigerweise nicht unter 6 Gew.-% betragen sollte. Vorzugsweise werden Kohlenwasserstoffgemische mit hohem Isobutengehalt und einem geringen Butadiengehalt verwendet, besonders bevorzugt ist allerdings ein reiner Isobuten-Feedstock. Dieser kann als solcher in Gegenwart von inerten Lösungsmitteln, wie gesättigten Kohlenwasserstoffen, beispielsweise Butan, Pentan, Hexan, Isooctan, Cyclobutan oder Cyclopentan, halogenierten Kohlenwasserstoffen, wie Methylenchlorid oder Chloroform, oder Kohlenstoffhalogenverbindungen mit geeigneten Schmelz- und Siedepunkten, mit Hilfe des erfindungsgemäßen Katalysatorsystems zum Polyisobuten umgesetzt werden. Der Isobuten-Feedstock kann geringe Mengen an Verunreinigungen wie Wasser, Carbonsäuren oder Mineralsäuren enthalten, ohne daß es zu kritischen Ausbeute- oder Selektivitätseinbrüchen bei der Polymerisation kommt. Dies bewirkt einen geringeren Alkohol/Etherverbrauch, der die vorgenannten Molverhältnisse zugunsten von BF₃ verändert. Es ist aber zweckdienlich und vorteilhaft, eine Anreicherung dieser Verunreinigungen in der Anlage zu vermeiden, indem man solche Stoffe beispielsweise durch Adsorption an festen Adsorbentien, wie Aktivkohle, Molekularsiebe oder Ionenaustauscher aus dem isobutenhaltigen Feedstock entfernt.

Die Polymerisation des Isobutens kann diskontinuierlich, halbkontinuierlich oder kontinuierlich durchgeführt werden. Dazu kann in an sich herkömmlichen Reaktoren, wie Rohrreaktoren, Rohrbündelreaktoren oder Rührkesseln gearbeitet werden, bevorzugt wird das erfindungsgemäße Verfahren in einem Schlaufenreaktor, also einem Rohr- oder Rohrbündelreaktor mit stetem Umlauf des Reaktionsgutes, durchgeführt, wobei in der Regel das Verhältnis von Zulauf zu Umlauf zwischen 1 : 1 und 1 : 1000, vorzugsweise zwischen 1 : 50 und 1 : 200 v/v variieren kann. Es versteht sich von selbst, daß die Zulaufmenge nach Äquilibrierung der Polymerisationsreaktion gleich der Menge des Reaktionsaustrages ist.

Zur Vermeidung hoher lokaler und stationärer Katalysatorkonzentrationen in der Polymerisationsapparatur, die Anlaß zu Doppelbindungsverschiebungen geben können, ist es zweckmäßig, sowohl bei der Einleitung vorgeformter Katalysatorkomplexe in den Reaktor, als auch bei der in situ-Darstellung der Bortrifluorid-Komplexe im Reaktor für eine gute Durchmischung aller Reaktionspartner schon bei der Einleitung in den Reaktor zu sorgen. Des weiteren ist es zweckdienlich, eine turbulente Strömung des Reaktionsgutes im Reaktor zu erzeugen, wozu der Reaktor beispielsweise mit geeigneten Einbauten, wie Umlenkblechen, versehen oder die Rohrquerschnitte so dimensioniert werden können, daß sich eine geeignete Strömungsgeschwindigkeit einstellt.

Die Verweilzeit des zu polymerisierenden Isobutens im Reaktor kann 5 sec. bis mehrere Stunden betragen, vorzugsweise wird eine Verweilzeit von 1 bis 30 und besonders bevorzugt, von 2 bis 20 Minuten gewählt. Die Bruttoreaktionsgeschwindigkeit ist von der Menge, vor allem aber dem Molverhältnis des eingesetzten Komplexes abhängig. Über dieses Verhältnis ist nahezu jede Bruttoreaktionsgeschwindigkeit einstellbar. Die optimale Reaktionsgeschwindigkeit ist apparativ bedingt und richtet sich nach der Wärmeabfuhr. Kurze Reaktionszeiten sind bevorzugt. Üblicherweise wird der Bortrifluorid/Alkohol/Ether-Katalysator in Mengen von 0,05 bis 1 Gew.-%, bezogen auf das eingesetzte Isobuten oder Isobuten-Kohlenwasserstoffgemisch, zugeführt.

Die Polymerisation wird zweckmäßigerweise bei Temperaturen unterhalb von 20°C, vorzugsweise unterhalb von 0°C durchgeführt. Obwohl Isobuten noch bei wesentlich tieferen Temperaturen erfolgreich zu hochreaktivem Polyisobuten polymerisiert werden kann, wird im allgemeinen bei Temperaturen von +40 und -60°C, insbesondere von -4 und -30°C und besonders bevorzugt von -10 und -20°C gearbeitet. Im allgemeinen wird die Polymerisation unter Atmosphärendruck ausgeführt, die Anwendung erhöhten Drucks, insbesondere das Arbeiten unter dem Eigendruck des Reaktionssystems, ist ebenfalls möglich, für das Resultat der Polymerisation aber in der Regel unerheblich. Vorteilhaft wird die Polymerisationsreaktion unter isothermen Bedingungen und unter Einstellung einer konstanten, stationären Monomerkonzentration im Reaktionsmedium betrieben. Die stationäre Isobutenkonzentration kann im Prinzip beliebig gewählt werden, zweckmäßigerweise wird in der Regel eine Monomerkonzentration von im allgemeinen 0,2 bis 50, vorzugsweise von 0,2 bis 5 Gew.-%, bezogen auf die gesamte Polymerisationsmischung, eingestellt.

Da die Polymerisationsreaktion exotherm verläuft, wird die Polymerisationswärme in der Regel mit Hilfe einer Kühlvorrichtung, die beispielsweise mit flüssigem Ammoniak als Kühlmittel betrieben werden kann, abgeführt. Eine andere Möglichkeit die Polymerisationswärme abzuleiten, ist die Siedekühlung. Dabei wird die freiwerdende Wärme durch die Verdampfung des Isobutens und/oder anderer leicht flüchtiger Bestandteile des Isobuten-Feedstocks oder des gegebenenfalls leichtflüchtigen Lösungsmittels wie Ethan, Propan oder Butan verbraucht, wodurch die Temperatur konstant bleibt. Nachteilig ist jedoch die Flüchtigkeit der BF₃-Komplexe, die zu Nebenreaktionen in der Gasphase führen kann.

Der Isobutenumsatz kann prinzipiell beliebig eingestellt werden. Es versteht sich aber von selbst, daß bei sehr niedrigen Isobutenumsätzen die Wirtschaftlichkeit des Verfahrens in Frage gestellt ist, wohingegen bei sehr hohen Isobutenumsätzen von mehr als 99 % die Gefahr von Doppelbindungsverschiebungen immer größer wird und kürzere Reaktionszeiten, d. h. verbesserte Wärmeabfuhr zwingend erforderlich werden. Üblicherweise beträgt der Isobutenumsatz aus diesen Gründen 20 bis 99 %, besonders bevorzugt sind Isobutenumsätze 90 bis 98 %. Überraschenderweise finden bei diesen hohen Isobutenumsätzen unter Verwendung des erfindungsgemäßen Katalysatorsystems Doppelbindungsverschiebungen nur in geringem Umfang statt und das dabei erhältliche Polymerisat hat immer noch einen Anteil von mehr als 80 Mol.-% endständigen Vinylidengruppen. Zur Erzeugung von Polyisobuten mit mehr als 90 Mol.-% endständigen Doppelbindungen wird bevorzugt (bei einem 50 gew.-%igen Isobutengehalt des Feeds) ein Isobutenumsatz von bis zu 99 %, vorzugsweise ein Isobutenumsatz zwischen 90 und 99, insbesondere zwischen 94 und 99 und besonders bevorzugt zwischen 96 und 98 % eingestellt.

Zur Aufarbeitung wird der Reaktionsaustrag zweckmäßigerweise in ein Medium geleitet, das den Polymerisationskatalysator desaktiviert und auf diese Weise die Polymerisation abbricht. Dazu können beispielsweise Wasser, Alkohole, Acetonitril, Ammoniak oder wäßrige Lösungen von Mineralbasen, wie Alkalimetall- und Erdalkalimetall-Hydroxidlösungen, Lösungen von Carbonaten dieser Metalle u.ä. verwendet werden.

Im weiteren Gang der Aufarbeitung wird das Polyisobuten, zweckmäßigerweise nach einer oder mehreren Extraktionen zur Entfernung von Restmengen an Komplex - üblicherweise Methanol- oder Wasserwäschen - destillativ in nicht umgesetztes Isobuten, Lösungsmittel, Oligomere und Polyisobuten getrennt. Das Isobuten, das Lösungsmittel und die Oligomeren können in die Polymerisationsapparatur zurückgeführt werden. Das gewünschte Polyisobuten fällt als Sumpfprodukt an.

Das erfindungsgemäße Verfahren ermöglicht die wirtschaftliche Herstellung hochreaktiver Polyisobutene, deren Gehalte an endständigen Doppelbindungen über 80 Mol.-%, und meist sogar über 90 Mol.-% betragen, mit sehr guten Selektivitäten bei sehr hohen Umsätzen und liefert zudem Polyisobutene im bevorzugten Molekulargewichtsbereich mit engen Molekulargewichtsverteilungen.

Alternativ ist es mit dem erfindungsgemäßen Verfahren möglich, bei erhöhter Temperatur die Polymerisation durchzuführen oder die Reaktivität des hergestellten Polyisobutens gegenüber dem Verfahren der US 5,408,018 nochmals zu steigern und es gelingt wegen der geringeren Löslichkeit des Komplexes, diesen leichter abzutrennen.

### Beispiel 1

Als Reaktor wurde ein Umlaufreaktor, bestehend aus einem Teflonschlauch von 7,1 m Länge mit einem Innendurchmesser von 6 mm verwendet, über den 100 l/h Reaktorinhalt mit einer Zahnradpumpe im Kreis geführt wurden. Rohr und Pumpe hatten einen Inhalt von 200 ml. Teflonschlauch und Pumpenkopf befanden sich in einem Kältebad von -23,8°C (Kryostat). Eine Mischung aus 300 g/h Isobuten und 300 g/h Hexan wurde über einem Molekularsieb 3 A auf unter 3 ppm Wasser getrocknet und durch eine Kapillare mit 2 mm Innendurchmesser auf -23,8°C vorgekühlt dem Umlaufreaktor zugeführt. BF₃ und Isopropanol/Diisopropylether als Komplexbildner wurden direkt in den Hexanzulauf zum Reaktor eingespeist. Der BF₃-Zulauf wurde auf 23,5 mmol eingestellt und die Gesamtmenge des Zulaufs einer Mischung aus Hexan, Isopropanol und Disisopropylether (15:1:4 ml) wurde solange variiert, bis ein Isobutenumsatz von 92,0 % erreicht wurde. Bei einer Reaktortemperatur von -18°C ergab sich ein Zulauf von 13,6 mmol Isopropanol und 27,2 mmol Disopropylether. Das Molekulargewicht des Polymeren nach Wasserwäsche und destillativer Aufarbeitung bei 230°C_{2mbar} des Reaktoraustrags betrug M_{N} 1070, die Reaktivität (Vinylidendoppelbindungsanteil) lag bei 97,0 %.

### Beispiel 2 - 6:

Man verfuhr wie in Beispiel 1 beschrieben, jedoch unter Verwendung steigender Molverhältnisse Ether zu Alkohol. Dabei wurde bei einem Isobutenumsatz von 92 bis 98 % die BF₃-Menge so lange erhöht, bis ein Molekulargewicht um 1000 gemäß GPC nach Aufarbeitung erhalten wurde. Für Beispiel 7 wurde als Ether Disek.-butylether eingesetzt. Die Ergebnisse sind in Tabelle 1 zusammengestellt.

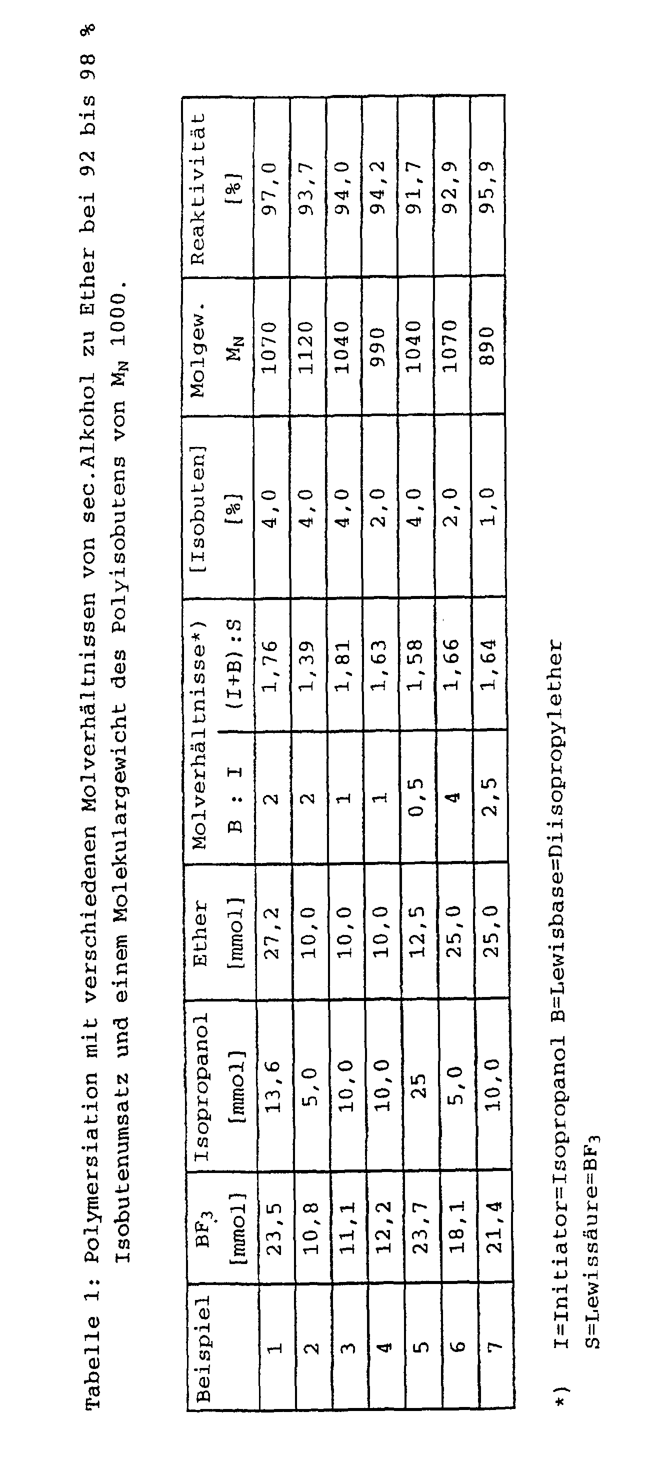

## Patentansprüche

1. Verfahren zur Herstellung hochreaktiver Polyisobutene mit einem Gehalt an endständigen Vinylidengruppierungen von über 80 Mol-% und einem mittleren Molekulargewicht von 500 bis 5000 Dalton durch kationische Polymerisation von Isobuten in flüssiger Phase in Gegenwart eines Komplexes aus Bortrifluorid, bei Temperaturen von +40°C bis -60°C, **dadurch gekennzeichnet, dass** man in Gegenwart eines Komplexes aus Bortrifluorid und
a) einem primären Alkohol mit 1 bis 20 C-Atomen oder einem sekundären Alkohol mit 3 bis 20 C-Atomen oder einem Gemisch dieser Alkohole und
b) einem von tertiären Alkylgruppen freien Ether der Formel I
R¹-O-R² I,
in der R¹ und R² primäre oder sekundäre Alkylgruppen mit 3 bis 10 C-Atomen bedeuten, mit der Maßgabe, dass mindestens eine der Gruppen R¹ und R² eine sekundäre Alkylgruppe ist, polymerisiert.

2. Verfahren nach Anspruch 1, **dadurch gekennzeichnet, dass** man als sekundären Alkohol a) Isopropylalkohol und/oder 2-Butanol verwendet.

3. Verfahren nach Anspruch 1, **dadurch gekennzeichnet, dass** man als Ether b) Diisopropylether, Di-sec.-butylether und/oder Isopropyl-sec.-butylether verwendet.

4. Verfahren nach Anspruch 1, **dadurch gekennzeichnet, dass** man den primären und/oder sekundären Alkohol a) und den Ether b) im Molverhältnis 0,01 zu 1 bis 10 zu 1 anwendet.

5. Verfahren nach Anspruch 1, **dadurch gekennzeichnet, dass** man den primären und/oder sekundären Alkohol a) und den Ether b) im Molverhältnis 0,02 zu 1 bis 2 zu 1 anwendet.

6. Verfahren nach Anspruch 1, **dadurch gekennzeichnet, dass** man Bortrifluorid, primären und/oder sekundären Alkohol und Ether in der Polymerisationsapparatur zusammenführt und den Komplex in der Polymerisationsmischung in situ erzeugt.

7. Verfahren nach Anspruch 1, **dadurch gekennzeichnet, dass** man den Bortrifluorid/Ether-Komplex vorformuliert und ihn zusammen oder getrennt mit dem primären und/oder sekundären Alkohol in den Lösemittel- oder den Monomerzulauf zum Reaktor oder direkt in den Reaktor einspeist.

8. Verfahren nach Anspruch 1, **dadurch gekennzeichnet, dass** man Polyisobutene mit einem Gehalt an endständigen Vinylidengruppierungen von über 90 Mol-% bei einem Isobutenumsatz von bis zu 95 % unter Anwendung eines vorgeformten Bortrifluorid/Isopropanol/Diisopropylether-Komplexes und im Molverhältnis sekundärer Alkohol zu Ether von 2 zu 1 bis 1 zu 5 und einem Bortrifluorid/Diisopropylether-Verhältnis von 0,6 zu 1 bis 0,9 zu 1 polymerisiert.

9. Verfahren gemäß Anspruch 1, **dadurch gekennzeichnet, dass** man als Isobutenquelle einen isobutenhaltigen C₄-Schnitt mit mindestens 6 Gew.-% Isobuten verwendet.

## Claims

1. A process for preparing highly reactive polyisobutenes having a terminal vinylidene group content of more than 80 mol% and an average molecular weight of from 500 to 5000 dalton by cationic polymerization of isobutene in the liquid phase in the presence of a complex comprising boron trifluoride at from +40°C to -60°C, which comprises polymerizing in the presence of a complex comprising boron trifluoride and
a) a primary alcohol having 1-20 carbon atoms or a secondary alcohol having 3-20 carbon atoms, or a mixture of these alcohols, and
b) an ether containing no tertiary alkyl groups and having the formula I
R¹-O-R² I,
where R¹ and R² are primary or secondary alkyl groups having 3-10 carbon atoms, with the proviso that at least one of R¹ and R² is a secondary alkyl group.

2. A process as claimed in claim 1, wherein the secondary alcohol a) used is isopropyl alcohol and/or 2-butanol.

3. A process as claimed in claim 1, wherein the ether b) used is diisopropyl ether, di-sec-butyl ether and/or isopropyl sec-butyl ether.

4. A process as claimed in claim 1, wherein the primary and/or secondary alcohol a) and the ether b) are used in a molar ratio of from 0.01:1 to 10:1.

5. A process as claimed in claim 1, wherein the primary and/or secondary alcohol a) and the ether b) are used in a molar ratio of from 0.02:1 to 2:1.

6. A process as claimed in claim 1, wherein boron trifluoride, primary and/or secondary alcohol and ether are combined in the polymerization reactor to generate the complex in situ in the polymerization mixture.

7. A process as claimed in claim 1, wherein the boron trifluoride/ether complex is preformulated and is introduced, together with the primary and/or secondary alcohol or separately, into the solvent or monomer feed to the reactor or directly into the reactor.

8. A process as claimed in claim 1, wherein polyisobutenes having a terminal vinylidene group content of more than 90 mol% are polymerized at an isobutene conversion of up to 95% using a preformed boron trifluoride/isopropanol/diisopropyl ether complex, a molar secondary alcohol/ether ratio of from 2:1 to 1:5 and a boron trifluoride/diisopropyl ether ratio of from 0.6:1 to 0.9:1.

9. A process as claimed in claim 1, wherein the isobutene source is a C₄ cut comprising isobutene in an amount of at least 6% by weight.

## Revendications

1. Procédé de préparation de polyisobutènes très réactifs ayant une teneur en groupements vinylidène terminaux supérieure à 80% en moles et une masse moléculaire moyenne comprise entre 500 et 5 000 daltons, au moyen d'une polymérisation cationique de l'isobutène en phase liquide, en présence d'un complexe de trifluorure de bore, à une température comprise entre +40°C et -60°C, **caractérisé en ce que** l'on procède à la polymérisation en présence d'un complexe constitué de trifluorure de bore et
a) d'un alcool primaire ayant 1 à 20 atomes de C ou d'un alcool secondaire ayant 3 à 20 atomes de C ou d'un mélange de ces alcools, et
b) d'un éther exempt de groupes alkyle tertiaires et représenté par la formule I
R¹-O-R² I,
dans laquelle R¹ et R² représentent un groupe alkyle primaire ou secondaire ayant 3 à 10 atomes de C, à condition qu'au moins un des groupes R¹ et R² soit un groupe alkyle secondaire.

2. Procédé selon la revendication 1, **caractérisé en ce que** l'on met en oeuvre, en tant qu'alcool secondaire a), l'alcool isopropylique et/ou le 2-butanol.

3. Procédé selon la revendication 1, **caractérisé en ce que** l'on met en oeuvre, en tant qu'éther b), l'éther diisopropylique, l'éther di-sec-butylique et/ou l'éther isopropyl-sec-butylique.

4. Procédé selon la revendication 1, **caractérisé en ce que** l'on met en oeuvre l'alcool primaire et/ou secondaire a) et l'éther b), dans un rapport molaire compris entre 0,01:1 et 10:1.

5. Procédé selon la revendication 1, **caractérisé en ce que** l'on met en oeuvre l'alcool primaire et/ou secondaire a) et l'éther b), dans un rapport molaire compris entre 0,02:1 et 2:1.

6. Procédé selon la revendication 1, **caractérisé en ce que** l'on réunit le trifluorure de bore, l'alcool primaire et/ou secondaire et l'éther dans le dispositif de polymérisation, afin de préparer le complexe in situ dans le mélange de polymérisation.

7. Procédé selon la revendication 1, **caractérisé en ce que** l'on procède à une préformulation du complexe trifluorure de bore/éther que l'on introduit, ainsi que l'alcool primaire et/ou secondaire, de manière conjointe ou séparée, dans l'amenée de solvant ou de monomères du réacteur, ou bien directement dans le réacteur.

8. Procédé selon la revendication 1, **caractérisé en ce que** l'on procède à la polymérisation des polyisobutènes ayant une teneur en groupements de vinylidène terminaux supérieure à 90% en moles, en obtenant un rendement d'isobutène de 95% au maximum, en mettant en oeuvre un complexe trifluorure de bore/isopropanol/éther diisopropylique préformé, et en observant un rapport molaire entre l'alcool secondaire et l'éther compris entre 2:1 et 1:5, et un rapport trifluorure de bore/éther diisopropylique compris entre 0,6 :1 et 0,9:1.

9. Procédé selon la revendication 1, **caractérisé en ce que** l'on met en oeuvre, en tant que source d'isobutène, une fraction en C₄ contenant l'isobutène et ayant au moins 6% en poids d'isobutène.
